# EUROPEAN PATENT APPLICATION

(11) **EP 4 397 389 A1**
(43) Date of publication of application: **10.07.2024**
(21) Application number: 23425002.5
(22) Date of filing: 04.01.2023
(51) Int. Cl.: B01D 46/00, B01D 46/10, B60H 1/24, B60H 3/06, B01D 46/30

(54) **PARTICULATE PARTICLE CAPTURE SYSTEM FOR FRONT BUMPER AND AUTOMOTIVE REAR VIEW MIRROR**

(71) Applicant: Vancheri, Salvatore, 93010 Serradifalco (CL) (IT)
(72) Inventor: Vancheri, Salvatore, 93010 Serradifalco (CL) (IT)

(57) **Abstract**

PARTICULATE PARTICLE CAPTURE SYSTEM AND AIR FILTRATION INSTALLED ON BUMPERS AND REAR-VIEW MIRRORS OF PASSENGER CARS. THE CONTINUOUS-ACTION ZERO-ENERGY SYSTEM SHALL BE ACTIVATED BY THE MOVEMENT OF THE VEHICLES ON WHICH THE SYSTEM IS INSTALLED BY THE MOVEMENT OF THE AIR PASSING THROUGH IT.

## Description

This invention arises from the need to eliminate or significantly reduce the presence of carbon particles of fine and ultra-fine particles present in the atmosphere that surrounds us, originates mainly from discharges of vehicles due to combustion or various industrial activities in the territory; The CPP particulate capture system enables continuous zero-energy action (without environmental impact) by vehicles on the roads, which indirectly become a useful tool for de-polluting.

The novelty of the air cleaning system with significant reduction of carbon particles present in the atmosphere, is given by the particularity of the system, put into operation by the same vehicles in motion, at the same time that they start to move and for the duration of their march. The "PPC" particle capture system is activated by the movement of the vehicles on which the system is installed thanks to the movement of the air passing through it.

The particularity of this invention is to obtain the reduction of what are the emissions present in the atmosphere of fine and ultra-fine particulate particles, produced by the effect of combustion by vehicles in motion.

The idea of using the "particle capture" system by installing it on the same moving vehicles that generate pollution, has the virtuous aim of capturing the polluting particles produced by the discharges of other vehicles.

Innovation, whose beneficial action is active in a virtuous manner according to a principle of environmental protection and active participation in the recovery and disposal of what pollutes, is to make the same vehicles in motion protagonists of the recovery of fine and ultra-fine particulates and of all the dimensionally analogous polluting particles contained in the air of the surrounding environment, producing beneficial effects on the environment by the action of capturing and eliminating polluting particles present in the air crossed by the same system, due to the movement of the vehicle where it is installed.

It is a static system with unidirectional intervention whose beneficial action is activated in a virtuous manner according to a principle of environmental protection and active participation in the recovery and disposal of what pollutes, thanks to the passage of air through filters.

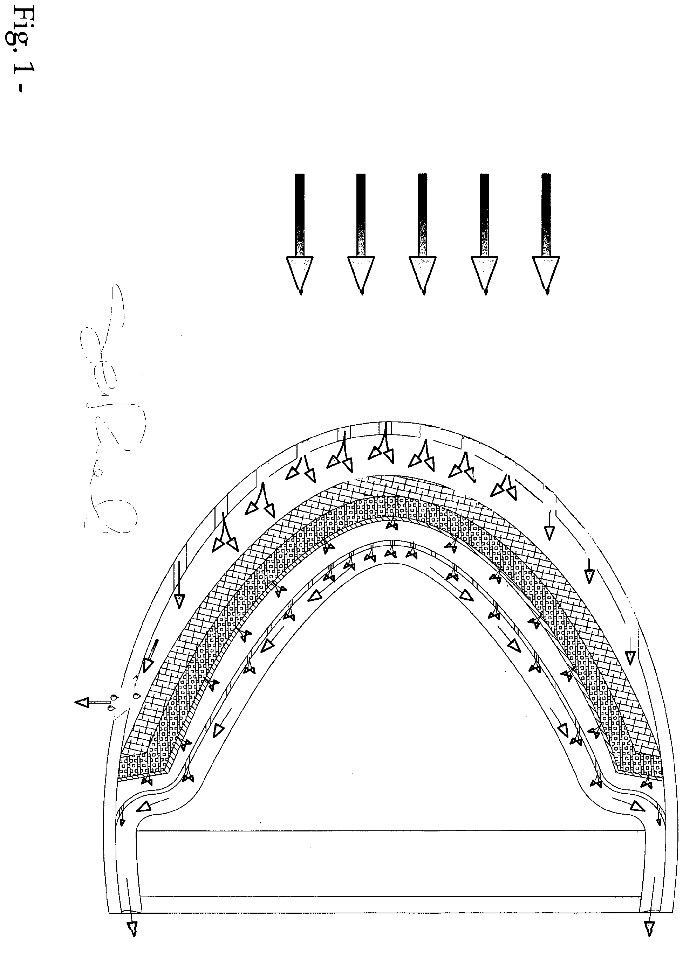

This invention consists consists in the installation of special filters for the "capture of particulate particles" fine and ultrafine on the main impacted surfaces of cars and in particular on the front bumpers and mirrors exterior of vehicles, particularly exposed to air impact during movement, even at low speeds (see fig. 1, which shows a section of the external rear-view mirror with the representation of dirty air at the inlet by means of arrows; the section highlights the micro-perforated impact surface with air, the filter system, the channels for conveying and expelling clean air and water in case of rain).

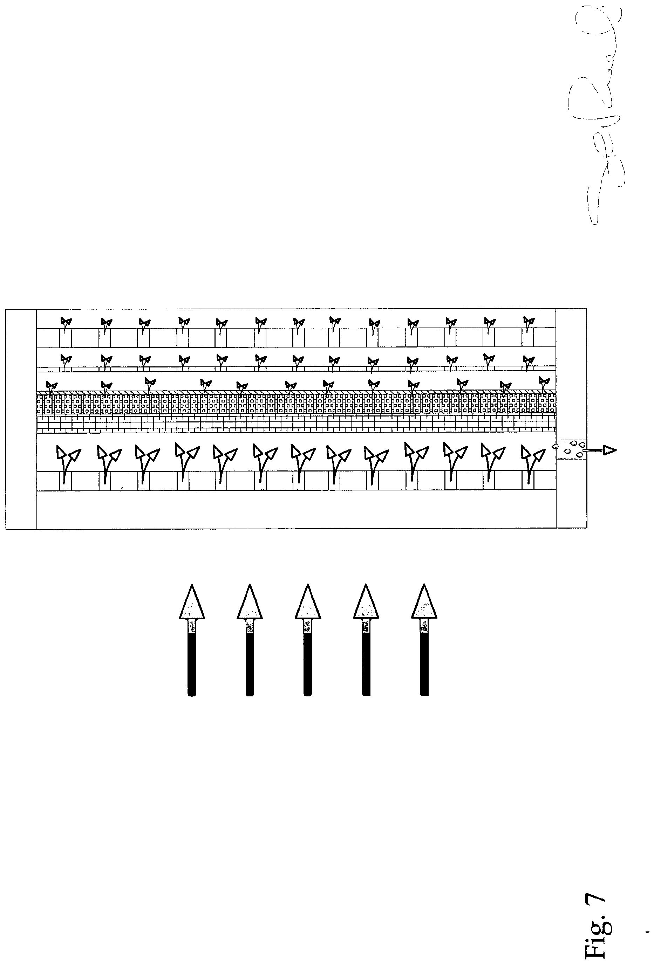

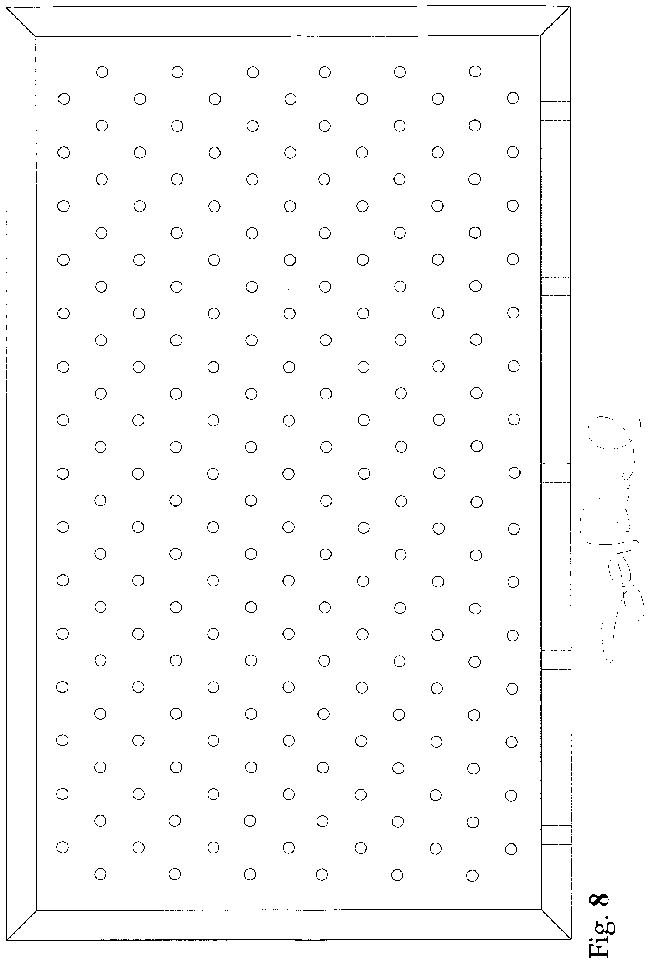

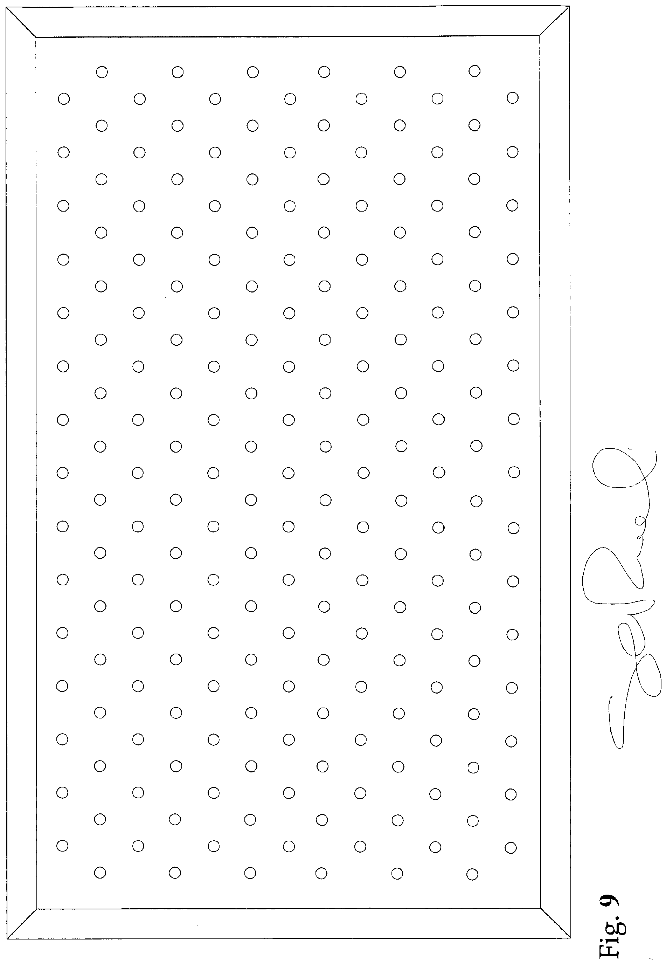

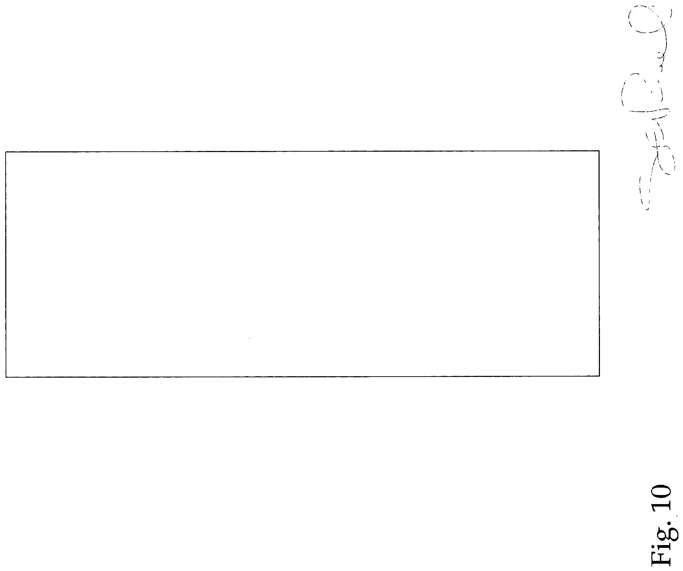

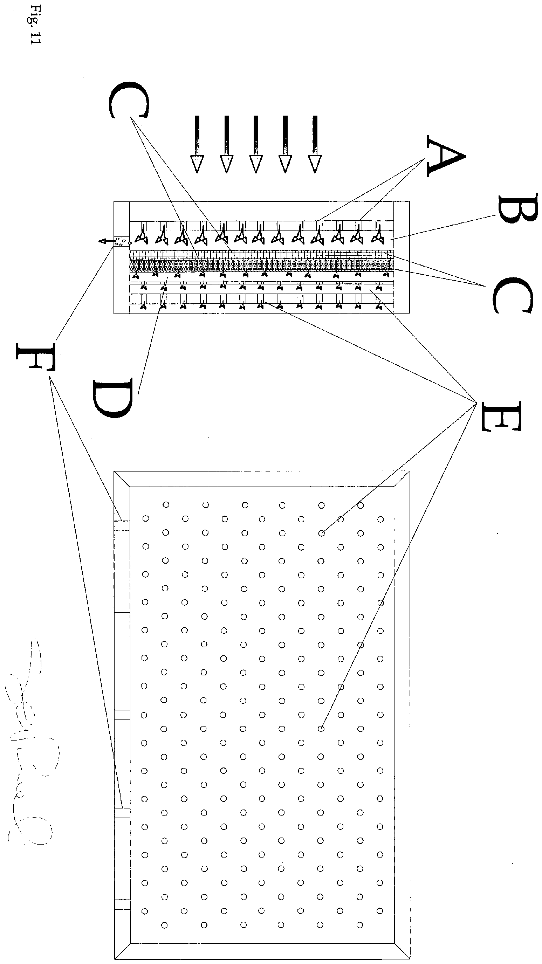

The filter system, consisting of filters for capturing particles of fine and ultrafine particulate pollutants (see figures 7, 8, 9, 10 and 11), is installed inside both the "houses" of the front bumpers and the mirrors of the cars.

The installation inside the rear-view mirrors takes place between the outer shell and the compartment in which the rear-view mirror is located (see figure 1).

In this case (rear-viw mirror), the outer shell of the rear-view mirror of this invention has a characteristic perforated shape, to allow the entry of the air to be treated (see Fig. 1 for the section representation, Fig. 3 for the lateral representation, Fig. 4 for the frontal representation of the part where the impact with the dirty air occurs,), The holes, present in the external part of the small mirror where the dirty air enters, are equal to n. 135, are cylindrical in shape, having the diameters of entry of the dirty air and exit of the same inside the mirror, equal to 3 mm; the length of the holes is 3 mm (see Fig. 5 A and Fig. 6 A).

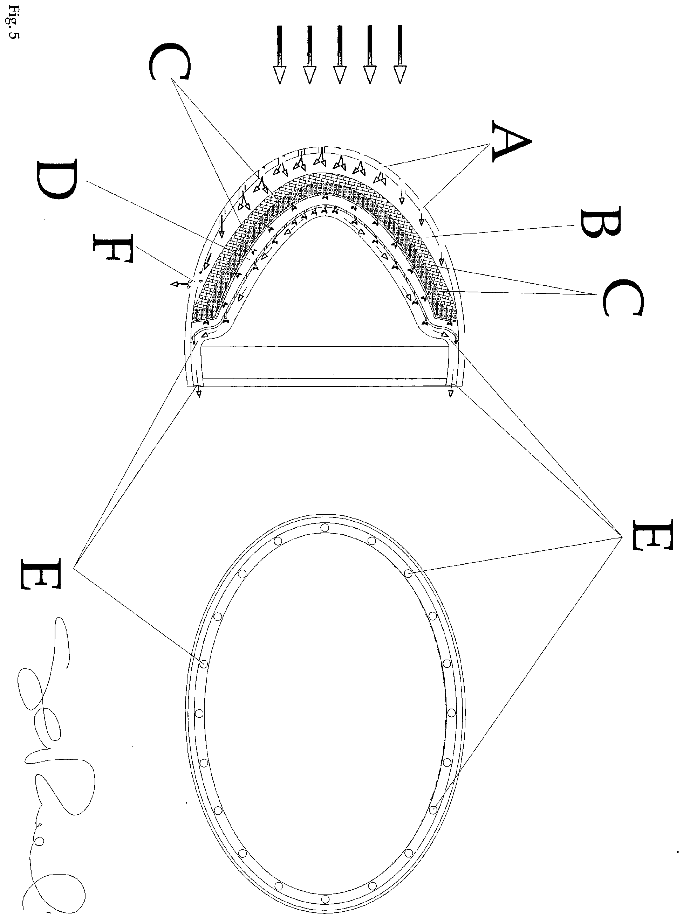

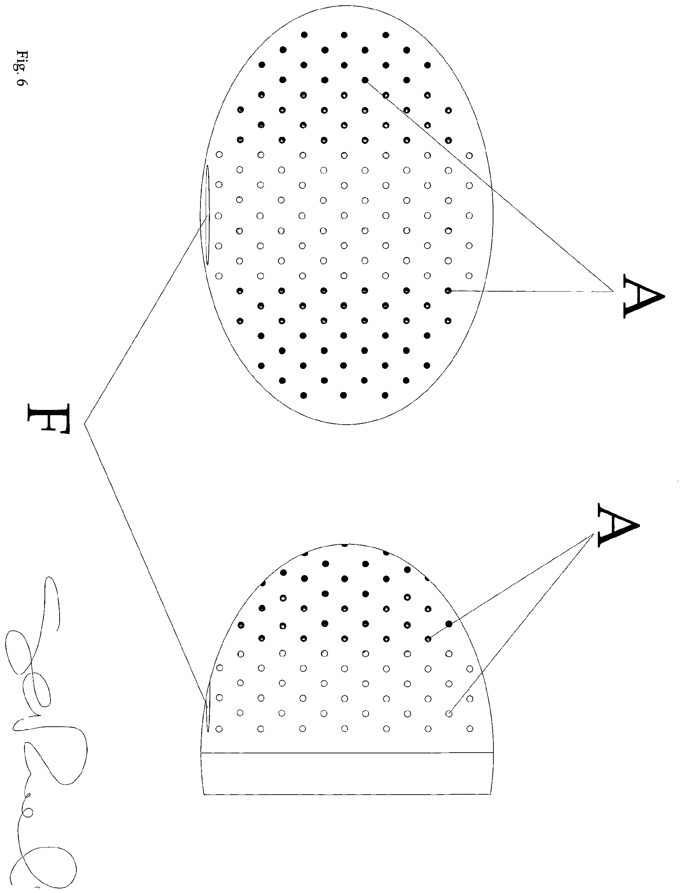

In the inner cavity of the shell described above, of which the present invention, is present a fixed containment structure, micro-perforated, on which are housed the filters (see fig. 1; fig. 5 and 6 C) where the internal micro-perforated structure supports, to its left with regard to fig. 1, the filtering system and, together with the second microperforated structure on the right, with regard always to fig. 1, contributes to form the conveying channel of the treated air, already clean, ready to be expelled (see Fig. 5 and 6 B). In Fig. 5 and 6 it is possible to see the cavity where the treated air is conveyed, already cleaned by the filter system, while with the letter E the channel of expulsion of the clean air to the outside and with the letter F the fissure for the expulsion of the water in case of rain).

This support structure of the filters allows easy extraction for their replacement (see fig. 1); is made of hard and resistant plastic material and by means of the mould it adapts to the inner cavity of the shell, thanks to special grooves realized inside the shell, supported by the pressure exerted by the next housing of the small mirror (see fig. 1).

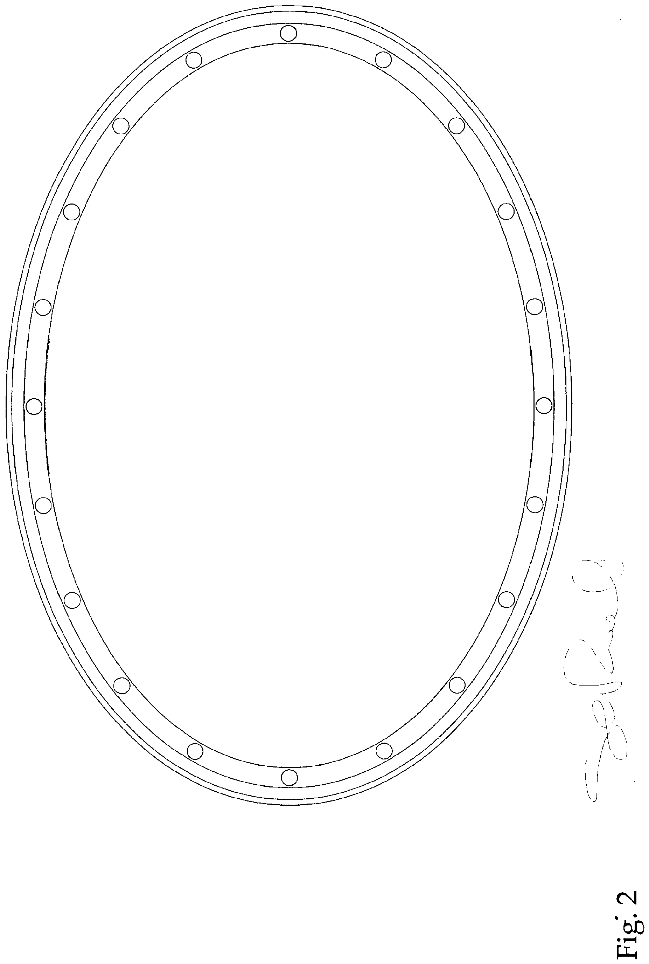

The dirty air entering the holes during the journey, once crossed the filtering system and after having undergone the cleaning treatment, is conveyed in a special outlet channel obtained in the inner part of the shell from the micro-perforated structure described above (see Fig. 1 and Fig. 5 with the letter D and E) and expelled by a system of 20 exit holes of 4 mm diameter placed in the perimeter above the mirror, in the front part of the shell (see fig. 2 where the part of the rear-view mirror in which the mirror is housed is represented, which corresponds the part in which, thanks to the outer holes of the outlet, the treated air comes out, channelled by the channel represented in the section of fig. 1 and fig. 5 with letter E).

In the lower part of the shell there is a slit, ellipsoid-shaped, with a diameter greater than about 5 cm and a diameter smaller than 4 mm, for the expulsion of water from the system in case of rain (see

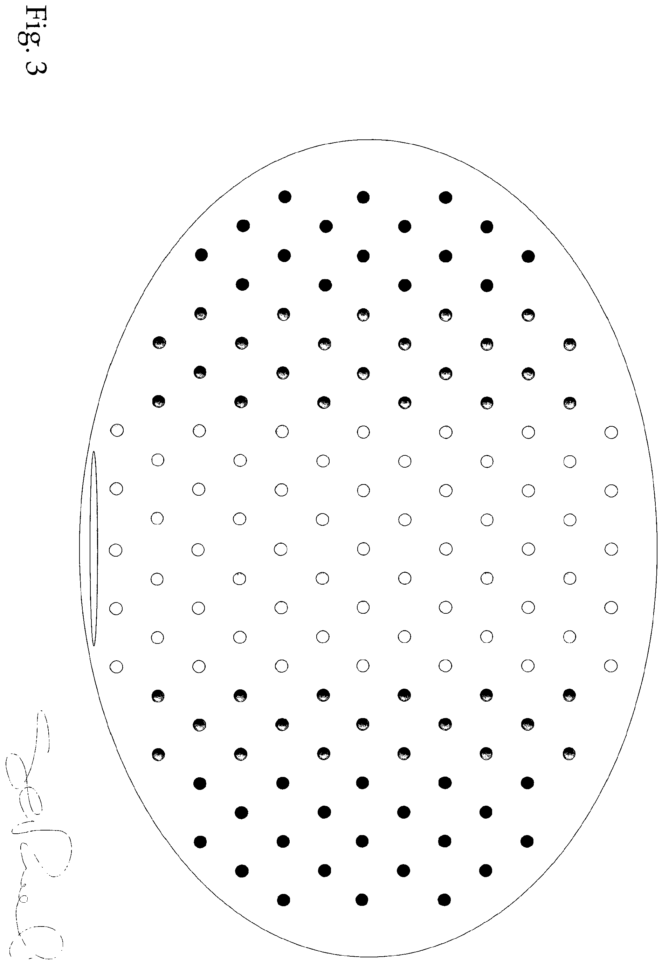

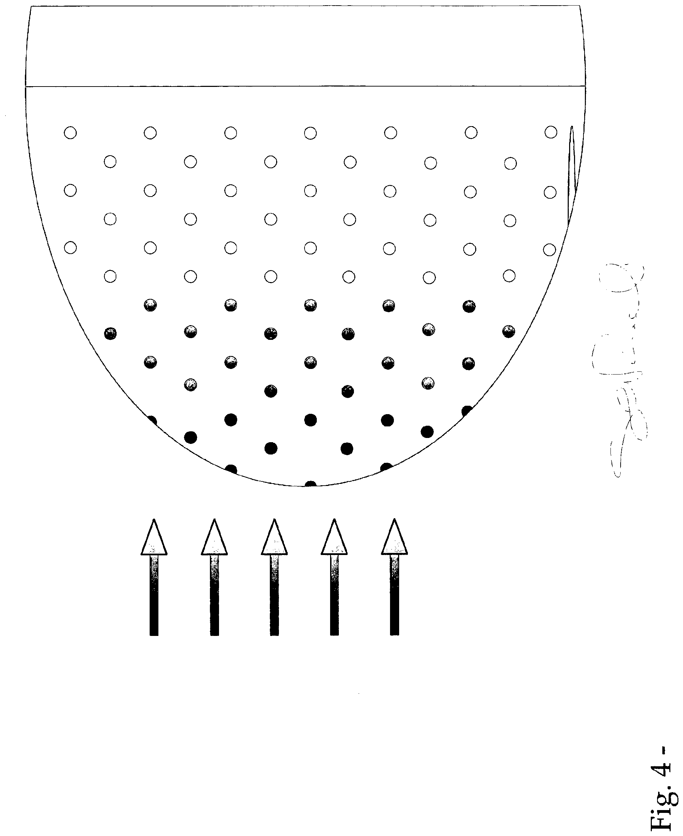

Fig. 1 in section in the lower part where the leakage of the water entering the system in case of rain is represented, also represented in Fig. 5. with the letter F, Fig. 3 and 4 representing side and front views and Fig. 6 where the slit is marked with the letter F).

Once the filtering system and the outlet channel in the outer shell have been allocated, the rearview mirror itself will be inserted, the same will be applied in order to allow a pressure on the filter system to lock them inside the shell (see Fig. 1) without allowing movement while driving or vibration.

The invention placed inside the front bumpers will be inserted, in a central position and internally with respect to the bumper case and attached to pressure and fins (in number of 6 along the perimeter of the found including 1 for short side and 2 for long side).

In the position corresponding to the housing of the filter system, in the outer part of the bumper there are holes where dirty air is introduced. These holes are equal to n. 135, are cylindrical, having the diameters of dirty air inlet equal to 3 mm; the length of the holes is 3 mm. In the case of a housing inside the front bumper it is not necessary to provide exit holes for clean air or water channel.

This invention realized as described above, both allocated inside the front bumpers and the rear-view mirrors, works at zero energy, since the filtering mechanism is activated by the normal movement of air caused by the running of the vehicles in which it is implemented; does not require additional energy for its operation.

The filters are interchangeable and therefore the life of the system is infinite and anyway for the useful life of the vehicle where it is implemented.

## Claims

1. A *continuous-action* particulate system, interchange filters, **characterized by** the fact that it can be inserted inside parts impacting with the air of motor vehicles.

2. Invention referred to in claim No.1 **characterized by** the fact that the particulate *system* cpp from the air, continuous action, is activated by the movement of the vehicle while driving and therefore does not require energy for its operation

3. Vehicle bumpers **characterized by** the fact of including within it a *continuous action cpp particulate particle capture system from the air referred to in claim No.1.*

4. Rear-view mirror of a vehicle **characterized by** the fact of including inside a system *of capture of particulate particles cpp* from the air with continuous action referred to in the claim no. 1

5. invention referred to in the previous claim **characterized by** the fact that the outer shell has a particular perforated shape, which allows the entry of air, whose holes are cylindrical in shape having a diameter of 3mm.

6. invention referred to in the previous claim **characterized by** the fact that it is equipped with an internal cavity for the conveyance of air to the particulate filters.

7. invention referred to in claim No.4 **characterized by** the fact that the outer shell in the adjacent part of the mirror is equipped with holes of cylindrical shape with a diameter of 4mm, that allow the exit of the treated air

8. invention referred to in the previous claim **characterized by** the fact that inside it is housed a CPP filter system within a microperforated structure of containment of particulate filters.

9. invention referred to in claim no.4 **characterized by** the fact of containing a cavity of first clean air conveyance after filtering and by a channel of clean air conveyance after filtering and expulsion to the outside.

10. invention referred to in claim No.4 **characterized by** the fact of being equipped in the lower part of elixir-shaped orifices for the expulsion of incoming water during rain.

11. invention referred to in claim No.3 **characterized by** the fact that the outer shell has a particular perforated shape, which allows the entry of air, whose holes are cylindrical in shape having a diameter of 3mm

12. invention referred to in claim no.3 **characterized by** the fact that inside it is hosted a CPP filtering system within a micro-perforated structure for containment of particulate filters
